(19) Europäisches Patentamt

European Patent Office

Office européen des brevets

(11) **EP 0 816 422 A1**

(12) **EUROPEAN PATENT APPLICATION**

(43) Date of publication:
**07.01.1998 Bulletin 1998/02**

(51) Int. Cl.$^6$: **C08K 13/02**, C08L 53/00,
D06N 3/00
// (C08K13/02, 3:22, 5:02),
(C08L53/00, 23:08)

(21) Application number: **96110304.1**

(22) Date of filing: **26.06.1996**

(84) Designated Contracting States:
**DE FR**

(71) Applicant:
**SHOWA DENKO KABUSHIKI KAISHA**
**Minato-ku, Tokyo 105 (JP)**

(72) Inventors:
• **Watanabe, Kazuyuki,**
**Showa Denko K.K., Oita Works**
**Oita-shi (JP)**

• **Natsuyama, Hisashi,**
**Showa Denko K.K.**
**Kawasaki-ku, Kawasaki-shi (JP)**
• **Watanabe, Naotoshi,**
**Showa Denko K.K.**
**Minato-ku, Tokyo 105 (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(54) **Flame retardant resin composition and molded article thereof**

(57)     Disclosed are a flame retardant resin composition which comprises (A) 70 to 98.5% by weight of a propylene-$\alpha$-olefin block copolymer wherein a ratio ($\eta_1/\eta_2$) of melt viscosity $\eta_1$ at a shear rate of $10^1$ sec$^{-1}$ to melt viscosity $\eta_2$ at a shear rate of $10^2$sec$^{-1}$ is 3.5 to 8 as measured as by a slit die method, (B) 1 to 20% by weight of an organic bromine type flame retardant, and (C) 0.5 to 10% by weight of antimony oxide, wherein the total percentage of (A) + (B) + (C) is equal to 100% by weight and a molded article thereof.

EP 0 816 422 A1

**Description**

BACKGROUND OF THE INVENTION

1) Field of the Invention

The present invention relates to a flame retardant resin composition of a low halogen content having excellent flexibility and calendering ability, which is suitably used, particularly in the fields of buildings, structures, electrical and electronic parts, etc., and to a molded article obtainable by using the same.

2) Prior Art

Polyvinyl chloride resin (hereinafter, referred to as "PVC") has excellent water resistance, acid resistance and solvent resistance and superior flame resistance also and is used in various fields. Sheets, films, leathers, etc., which are obtainable by calendering PVC has been consumed in large quantities in industrial and agricultural fields.

Problems have occurred in the aspects of waste disposal of PVC and safety of PVC in fire in recent years since halogen being contained in PVC forms a toxic gas during combustion. Under such social background, various methods for reducing halogen as possible as have been studied.

For example, as substitution of PVC, flame retardant resins in which a non-halogen type flame retardant, e.g., metal hydroxide, metal oxide, phosphorus type flame retardant, etc., has been added to a polyolefin resin, have been suggested (Japanese Patent Laid open Nos.63-20348, 63-61055, 63-128038, 63-154760 and 3-20342).

However, there are problems that all the flame retardant resins obtained by the above-mentioned methods are inferior in flexibility and difficult to calender.

SUMMARY OF THE INVENTION

In light of these circumstances, an object of the present invention is to provide a flame retardant resin composition of a low halogen content having excellent flexibility and calendering ability and a molded article obtainable by using the same.

As a result of extensive study, the present inventors have found that the above-mentioned object can be attained by using a propylene-$\alpha$-olefin block copolymer having particular properties, and established the present invention based on this finding.

That is, according to a first aspect of the present invention, there is provided a flame retardant resin composition which comprises:

(A) 70 to 98.5% by weight of a propylene-$\alpha$-olefin block copolymer wherein a ratio ($\eta_1/\eta_2$) of melt viscosity $\eta_1$ at a shear rate of $10^1 sec^{-1}$ to melt viscosity $\eta_2$ at a shear rate of $10^2 sec^{-1}$ is 3.5 to 8 as measured as by a slit die method,
(B) 1 to 20% by weight of an organic bromine type flame retardant, and
(C) 0.5 to 10% by weight of antimony oxide, wherein the total percentage of (A) + (B) + (C) is equal to 100% by weight.

According to a second aspect of the present invention, there is provided a flame retardant resin composition which comprises:

(A) 20 to 80% by weight of a propylene-$\alpha$-olefin block copolymer wherein a ratio ($\eta_1/\eta_2$) of melt viscosity $\eta_1$ at a shear rate of $10^1 sec^{-1}$ to melt viscosity $\eta_2$ at a shear rate of $10^2 sec^{-1}$ is 3.5 to 8 as measured as by a slit die method,
(B) 1 to 20% by weight of an organic bromine type flame retardant,
(C) 0.5 to 10% by weight of antimony oxide, and
(D) 15 to 70% by weight of an ethylene-$\alpha$-olefin random copolymer wherein a percentage of $\alpha$-olefin in the ethylene-$\alpha$-olefin random copolymer is 20 to 30% by weight and a Shore A hardness is 50 to 65, wherein the total percentage of (A) + (B) + (C) + (D) is equal to 100% by weight.

According to a third aspect of the present invention, there is provided a laminate coated a flame retardant resin composition comprising:

(A) 70 to 98.5% by weight of a propylene-$\alpha$-olefin block copolymer wherein a ratio ($\eta_1/\eta_2$) of melt viscosity $\eta_1$ at a shear rate of $10^1 sec^{-1}$ to melt viscosity $\eta_2$ at a shear rate of $10^2 sec^{-1}$ is 3.5 to 8 as measured as by a slit die method,
(B) 1 to 20% by weight of an organic bromine type flame retardant, and

(C) 0.5 to 10% by weight of antimony oxide, wherein the total percentage of (A) + (B) + (C) is equal to 100% by weight,
on at least one side of a fibrous base cloth.

According to a fourth aspect of the present invention, there is provided a laminate coated a flame retardant resin composition comprising:

(A) 20 to 80% by weight of a propylene-$\alpha$-olefin block copolymer wherein a ratio ($\eta_1/\eta_2$) of melt viscosity $\eta_1$ at a shear rate of $10^1 sec^{-1}$ to melt viscosity $\eta_2$ at a shear rate of $10^2 sec^{-1}$ is 3.5 to 8 as measured as by a slit die method,
(B) 1 to 20% by weight of an organic bromine type flame retardant,
(C) 0.5 to 10% by weight of antimony oxide, and
(D) 15 to 70% by weight of an ethylene-$\alpha$-olefin random copolymer wherein a percentage of $\alpha$-olefin in the ethylene-$\alpha$-olefin random copolymer is 20 to 30% by weight and a Shore A hardness is 50 to 65, wherein the total percentage of (A) + (B) + (C) + (D) is equal to 100% by weight,
on at least one side of a fibrous base cloth.

BRIEF DESCRIPTION OF THE DRAWINGS

Fig.1 shows a carbon isotope ($^{13}$C) nuclear magnetic resonance spectrum of ethylene-propylene copolymer.
Fig.2 is an illustration showing the name of the each carbon derived from chain distribution in a polyolefin.

DETAILED DESCRIPTION OF THE INVENTION

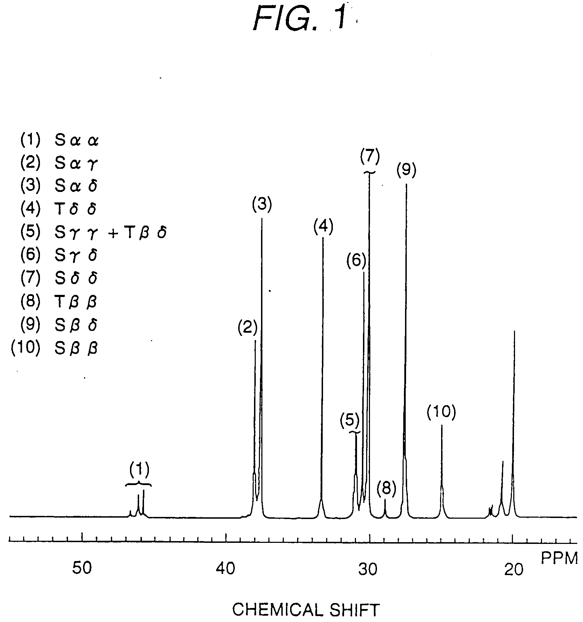

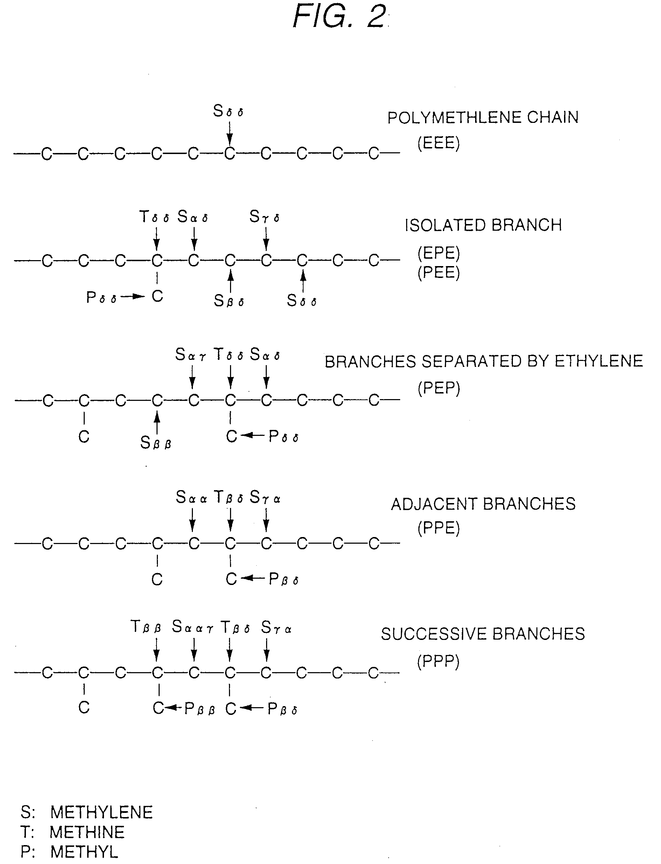

The present invention will now be explained in more detail.
The propylene-$\alpha$-olefin block copolymer (A) (hereinafter referred to as "BPP") of the present invention is a block copolymer comprising a polypropylene block and a copolymer block of propylene and at least one member selected from the group consisting of ethylene and $\alpha$-olefins having 4 to 12 carbon atoms. Examples of $\alpha$-olefin include 1-butene, 3-methyl-1-butene, 3-methyl-1-pentene, 4-methyl-1-pentene, 4-dimethyl-1-pentene, vinylcyclopentane, vinylcyclohexane, and the like. The $\alpha$-olefins may be used alone or in a mixture of 2 or more.
In the BPP of the present invention, it is necessary that the ratio ($\eta_1/\eta_2$) of melt viscosity $\eta_1$ at a shear rate of $10^1 sec^{-1}$ to melt viscosity $\eta_2$ at a shear rate of $10^2 sec^{-1}$ as measured by a slit die method is 3.5 to 8.
The slit die measurement method is a method of measuring a melt viscosity at a temperature of 170°C using a slit die with 20mm width, 1.5mm height and 60mm length. This method is described in more detail in C.D. Han; Rheology in Polymer Processing, Academic, New York (1976) and J.L. White; Principles of Polymer Engineering Rheology, John Wiley, New York (1990).
Specifically, the measurement is performed using a commercially available viscometer with a slit die (Labo Plastomill Model D20-20, made by Toyo precision Instruments Laboratories).
The melt viscosity ratio ($\eta_1/\eta_2$) is preferably 4.0 to 7.5, and particularly suitably 4.5 to 7.0. When the melt viscosity ratio is below 3.5, roll adhesion of resin composition occurs during calendering and furthermore rigidity of resin composition deteriorates, whereas above 8 it is not preferable since flexibility of resin composition deteriorates and calendering becomes difficult.
The percentage of the copolymer block to the total copolymer is generally 30 to 70 % by weight (hereinafter, referred to as "wt%"), and more preferably 35 to 68 wt%, and particularly suitably 40 to 65 wt%.
As BPP having excellent calendering ability, it is preferred that BPP has the following properties (a) and (b).
That is, (a) a p-xylene-insoluble matter at 25°C is 25 to 65 wt%, and (b) a p-xylene-soluble matter at 25°C has (i) an average propylene content (FP) of 20 to 80 mole % based on 2-site model, (ii) a propylene content ($P_p$) of 65 to 90 mole % in a copolymer ($P_H$) which is produced at an active point at which propylene is preferentially polymerized, based on 2-site model, and (iii) a proportion ($P_{f1}$) of $P_H$ in the copolymer in a range of 0.40 to 0.90.
The (a) p-xylene-insoluble matter is an insoluble matter when about 1 wt % of BPP is dissolved in p-xylene at a temperature of 130°C and then cooled to 25°C, and the BPP content according to the present invention is preferably 25 to 65 wt%, and particularly suitabley 30 to 60 wt%. The (b) p-xylene-soluble matter is dissolved components when dissolved according to the above-mentioned procedure, and the properties determined according to the 2-site model are preferably within the ranges specified above.
The 2-site model of propylene-$\alpha$-olefin will now be explained using the example of propylene-ethylene copolymer. Fig. 1 shows a carbon isotope nuclear magnetic resonance spectrum ($^{13}$C-NMR) for propyleneethylene copolymer. In the spectrum, 10 peaks indicated as (1) to (10) appear depending on the differences in the chain distribution (sequence of ethylene and propylene). The designations of the chains are found in Carman, C.J., et al; Macromolecules, Vol.10, p.536-544 (1977), and are shown in Fig. 2. The chains may be expressed in terms of reaction probability (P) assuming a copolymerization reaction mechanism, and the relative intensity of each peak of (1) to (10) when the peak intensity of the whole is defined as 1 may be expressed as a Bernoulli statistical probability equation with P as a parameter.

For example, in the case of (1) $S\alpha\alpha$, when propylene unit is represented by symbol "p" and ethylene unit by symbol "e", possible chains are the 3 types of [pppp], [pppe] and [eppe], and they are expressed as reaction probability (P), respectively and added together. Equations are made up in the same manner for the remaining peaks of (2) to (10) , and P is optimized so that the 10 equations are closest to the actually measured peak intensities.

The 2-site model assumes this reaction mechanism, and it is described in H.N. CHENG; Journal of Applied Polymer Science, Vol.35, p.1639-1650 (1988). That is, in the model of copolymerization of propylene and ethylene using a catalyst, assuming both a propylene content ($P_p$) of a copolymer ($P_H$) being produced at an active point at which propylene is preferentially polymerized and a propylene content ($P'_p$) of a copolymer being produced at an active point at which ethylene is preferentially polymerized, the proportion ($P_{f1}$) of $P_H$ in the copolymer being used as a parameter, the probability equation shown in Table 1 is obtained.

Thus, the 3 parameters of $P_p$, $P'_p$, and $P_{f1}$ are optimized so that the relative intensities of the mentioned-above $^{13}$C-NMR spectrum accord with the probability equations in Table 1.

The average propylene content (FP) of the (i) p-xylene-soluble matter of BPP of the present invention is determined from the following equation using the above-mentioned 3 parameters.

$$FP = P_p \times P_{f1} + P'_p \times (1-P_{f1}) \text{ (mole \%)}$$

FP determined from this equation is preferably 20 to 80 mole%, and more preferably 30 to 70 mole%.

Furthermore, the parameter (ii) $P_p$ is preferably 65 to 90 mole%, and particularly suitably 70 to 80 mole.

Moreover, (iii) $P_{f1}$ is preferably 0.40 to 0.90, and particularly suitably 0.48 to 0.82.

The polymerization of BPP of the present invention is carried out by a slurry method in the presence of an inert hydrocarbon such as hexane, heptane, kerosene, etc., or a liquefied $\alpha$-olefin solvent such as propylene, or by a gas-phase method in the absence of a solvent, at a temperature of from room temperature to 130°C, preferably 50 to 90 °C, under a pressure of 2 to 50 kg/cm$^2$. The reactor used for the polymerization step may be one which is conventionally used in the field of the art, e.g., a stirring bath type reactor, a fluidized bed type reactor or circulation type reactor and a continuous process, semi-batch process and batch process may be applied.

Specifically, it may be obtained using a known multistage polymerization process. This is a method in which propylene and/or propylene-$\alpha$-olefin copolymer are polymerized in a first-stage reaction, and then the propylene and $\alpha$-olefin are copolymerized in a second-stage reaction, and this type of method is described in, for example, Japanese Patent laid-open No. 3-97747, No. 3-205439, No. 4-153203, No. 4-261423, No. 5-93024, etc.

The (B) organic bromine type flame retardant of the present invention is an organic compound having a bromine atom(s) in the molecule, which has been widely used as a flame retardant in the field of resin. Examples thereof include, typically, decabromodiphenyl oxide, octabromodiphenyl oxide, tetrabromodiphenyl oxide, tetrabromobisphenol A, hexabromocyclododecane, bistribromophenoxyethane, tribromophenol, ethylenebistetrabromophthalimide, ethylenebispentabromophthalimide, ethylenebispentabromodiphenyl, brominated polystyrene, TBA polycarbonate oligomer, hexabromobenzene, 1,2-bis (tribromophenoxy)ethane, tris(2,3-dibromopropyl-1) isocyanurate, tris(2,4,6-tribromophenoxy)isocyanurate, etc., among which ethylenebistetrabromophthalimide, ethylenebispentabromophthalimide, ethylenebispentabromodiphenyl, tris(2,3-dibromopropyl-1)isocyanurate, tris(2,4,6-tribromophenoxy)isocyanurate are preferable.

The (C) antimony oxide of the present invention has been widely used as a flame retardant auxiliary agent in the field of the above-mentioned art. Examples thereof include, typically, antimony trioxide, and antimony pentoxide. The (C) antimony oxide has usually an average particle size of 0.3 to 150 $\mu$m.

The (D) ethylene-$\alpha$-olefin random copolymer of the present invention can be obtained by random copolymerization of ethylene with other $\alpha$-olefin in the presence of a catalyst. Examples of $\alpha$-olefin include $\alpha$-olefins having 3 to 12 carbon atoms, among which propylene is preferable. The percentage of $\alpha$-olefin in the copolymer is 20 to 30 wt%, preferably 22 to 29 wt% and particularly suitably 25 to 29 wt%. When the percentage of $\alpha$-olefin is below 20 wt%, flexibility of resin composition obtained ( herein-after referred to as "resin composition") deteriorates, whereas above 30 wt% mechanical strength of resin composition deteriorates and practical use of resin composition becomes scarce.

Further, the above-mentioned copolymer (D) has a Shore hardness of 50 to 65 as measured according to ASTM D2240, preferably 52 to 63 and particularly, suitably 54 to 60. When the Shore hardness is below 50, calendering ability and mechanical strength of resin composition deteriorate, whereas it is not preferable since above 65 flexibility and appearance of resin composition deteriorate.

The copolymer (D) may be obtained also by copolymerizing ethylene and other $\alpha$-olefin with other third component within the limits not to hinder the object of the present invention. Examples of the third component include, typically, non-conjugated dienes including dichloropentadiene, methyltetraindene, methylenenorbornene, ethylidenenorbornene, 1,4-hexadiene, etc.

The percentage of each component to the flame retardant resin composition of the present invention (hereinafter, referred to as "present composition") will be described below.

(1) [The first and third present invention]

The percentage of component (A) to the present composition is 70 to 98.5 wt%, preferably 75 to 97 wt% and particularly suitably 80 to 95 wt%. When the percentage is below 70 wt%, calendering ability of resin composition deteriorates, whereas above 98.5 wt% flame resistance of resin composition deteriorates.

The percentage of component (B) to the present composition is 1 to 20 wt%, preferably 2 to 18 wt% and particularly suitably 3 to 16 wt%. When the percentage is below 1 wt%, flame resistance deteriorates whereas above 20 wt% it is not preferable since problems of corrosion and discoloration due to bromine occur.

The percentage of component (C) to the present composition is 0.5 to 10 wt%, preferably 1 to 9 wt% and particularly suitably 2 to 8 wt%. When the percentage is below 0.5 wt%, flame resistance deteriorates, whereas above 10 wt% flexibility disappears and thus processing ability deteriorates.

It is preferred that the bromine content in the present composition is in the range of 0.5 to 10 wt%. Even in such low bromine content, the present composition provides sufficient flame resistance.

(2) [The second and fourth present inventions]

The percentage of component (A) to the present composition is 20 to 80 wt%, preferably 25 to 75 wt% and particularly suitably 30 to 70 wt%. When the percentage is below 20 wt%, calendering ability deteriorates, whereas above 80 wt% flame resistance deteriorates.

The percentage of component (B) or (C) to the present composition is the same as that of component (B) or (C) described in the first and third present inventions of paragraph (1).

The bromine content in the present composition also is the same as described in the first and third present inventions of paragraph (1).

The percentage of component (D) to the present composition is 15 to 70 wt%, preferably 20 to 68 wt% and particularly suitably 25 to 65 wt%. When the percentage is below 15 wt%, flexibility deteriorates, whereas above 70 wt% it is not preferable since mechanical strength deteriorates.

Furthermore, known flame retardant, e.g., tetrachlorophthalic anhydride, chlorinated paraffin, chlorinated bisphenol A, brominated bisphenol S, chlorinated diphenyl, brominated diphenyl, chlorinated naphthalyl, tris($\beta$-chloroethyl) phosphate, tris(di-bromobutyl)phosphate, etc., may be used together with the present composition. In this case, the blending proportion is usually in the range of 0.5 to 10 wt%.

Additives being conventionally utilized by those skilled in the art, for example, antioxidants, weathering stabilizers, antistatic agents, lubricants, blocking resistance agents, anti-clouding agents, pigments, plasticizers, softening agents, fillers and the like may be appropriately incorporated in the present composition within limits not to hinder the object of the present invention.

The components of the present invention are mixed using a known blending procedure, for example, a ribbon blender, a tumbler, a Henschel mixer, etc., and then melt mixed with a kneader, mixing rolls, a Banbury mixer, an extruder, etc., thus obtaining the present composition. The temperature during melt mixing is usually 170 to 280 °C and preferably 190 to 260°C.

The present composition thus obtained is molded by a known melt molding methods or a compression molding method to form films, sheets, tubes, bottles, etc. The molded article thus obtained can be used alone or as a laminate obtainable by laminating other material(s).

The laminates in the third and fourth present inventions will be described below.

The laminate of the present invention can be obtained by laminating the present composition on at least one side of a fibrous base cloth.

Examples of the fibrous base cloth include natural fibers including cottons, hemps, etc., regenerated fibers including viscose rayons, cupras, etc., semisynthetic fibers including di-or tri-acetate fibers, etc., synthetic fibers including nylon-6 fibers, nylon-66 fibers, polyester fibers, aromatic polyamide fibers, acryl fibers, polyvinyl-chloride fibers, polyvinylalcohol fibers, polyethylene fibers, polypropylene fibers, etc. The fibers of base cloth may be any form of short fiber spun yarn stripe, long fiber spun yarn stripe, split yarn and tape yarn. The base cloths may be woven fabrics, knit fabrics, nonwoven fabrics or mixed cloths thereof, among which woven fabrics and knits fabrics are preferable, considering both strength and bending resistance of sewn portions. It is preferred that the form of fabric is a form of long fiber(filament) and a flat woven cloth. The base cloths are not limited and useful for improvement of mechanical strength of laminates obtained.

Known methods for lamination thereof are applied. That is, examples of the method include a method for lamination with a press molding machine, a method for lamination with a roll using a calendering machine, a method for lamination on a base cloth with an extrusion laminator, etc.

PREFERRED EMBODIMENTS OF THE INVENTION

The preferred embodiment of the present invention will be described in detail below, referring to Examples, which are not intended to limit the scope of the present invention.
In the following Examples and Comparative Examples, the following test methods were applied.

[Tensile test]

Tensile strength at break and elongation at break were measured according to JIS K7113.

[Calendering ability]

The state of adhesion of resin composition to a roll surface in calendering was observed visually and the evaluation was made based on the following four criterions

◎ : There is no adhesion of resin composition
○ : A small amount of resin composition is adhered
△ : A considerably amount of resin composition is adhered
X : A large amount of resin composition is adhered

[Sheet appearance]

The surface of sheet obtained by calendering was evaluated visually based on the following four criterions.

◎ : The surface is very smooth
○ : The surface is sufficiently smooth.
△ : The surface has some portions which were not smooth
X : The surface has a spiny shape of projections

[Soil resistance test]

The laminate sheet was immersed in the composition for judgement of soil composed of the following substances at room temperature for 7 days and then taken out to judge soil visually.

Composition for judgement of soil :

| carbon black | 1.75 wt% |
|---|---|
| silica | 17.0 wt% |
| cultivated land earth | 38.0 wt% |
| mineral oil | 8.75 wt% |
| cement powders | 17.0 wt% |
| ferric oxide | 0.5 wt% |
| water, surfactant and other substances | 17.0 wt% |

The state of soil was evaluated based on the following four criterions.

◎ : There is little soil
○ : There is a little soil
△ : Soil is remarkable
X : Soil is very remarkable.

[Surface hardness]

The measurement was made with Shore A according to ASTM D2240.

[Flame resistance]

Afterflame, afterglow, carbonized length and carbonized area were measured according to JIS A1322.

[Sewing test]

The state of sewn portions were evaluated visually based on the following four criterions.

◎    : No breakages exist.

○    : Small breakages exist very partially.

△    : Sewing has been barely conducted, though some breakages exist.

X    : It is impossible to sew since many breakages exist.

Tensile test was conducted for sewn portions according to JIS L1096 to measure sewing strength.

[Analysis of p-xylene-soluble matter by 2-site model]

The $^{13}$C-NMR spectrum of the p-xylene-soluble matter was measured with the apparatus and under the measuring conditions shown below, and each of the signals was classified according to the method described in A. Zambelli, et al.; Macromolecules, 13, p.267(1980).

| | |
|---|---|
| Apparatus | : JNM-GSX400, made by Nihon Denshi K.k. |
| Measuring mode | : Proton decoupling method |
| Pulse width | : 8.0 μ sec |
| Pulse repeating time | : 5.0 sec |
| Total repeating times | : 20,000 |
| Solvent | : 1,2,4-trichlorobenzene/heavy benzene mixed solvent (75/25 vol%) |
| Internal circulation | : Hexamethyldisiloxane |
| Sample concentration | : 300mg/3.0ml solvent |
| Measuring temperature | : 120°C |

Then, 2-site model analysis was performed to determine FP, $P_p$ and $P_{f1}$.

[Components of resin composition]

(A) Propylene-α-olefin block copolymer

A block copolymer comprising a polypropylene block and an ethylene-propylene copolymer block was used. The species (BPP 1 to 8) and properties (melt viscosity ratio, copolymer block proportion, p-xylene-insoluble matter and FP, $P_p$ and $P_{f1}$ of the p-xylene-soluble matter) are shown in Table 2.

(B) Organic bromine type flame retardant

Ethylenebispentabromodiphenyl, made by Albemarle Asano K.K., Japan. trademark "Saytex 8010" (hereinafter, referred to as "Br1",) tris(2,4,6-tribromophenoxy)isocyanurate, made by Daichi Kogyo Seiyaku K.k., trademark "SR245" (hereinafter, referred to as "Br2") and ethylenebistetrabromophthalimide, made by Albemarle Asano K.K., Japan, "Saytex BT-93" (hereinafter, referred to as "Br3"), were used.

(C) Antimony oxide

Antimony trioxide, made by Nihon Kogyo K.k., Japan was used.

(D) Ethylene-α-olefin random copolymer

Ethlene-propylene random copolymer wherein the percentage of propylene copolymer is 27 wt% and the Shore A hardness is 57 (hereinafter, referred to as "EPR1") and ethylene-propylene random copolymer wherein the percentage of propylene copolymer is 26 wt% and the Shore A hardness is 55 (hereinafter, referred to as "EPR2"), were used.

Examples 1 to 11, Comparative Examples 1 to 4

The species and amount of each BPP, organic bromine type flame retardant and antimony oxide shown in Table 3, and as additives, 0.3 parts by weight of pentaerythrityle-tetrakis[3-(3,5-di-t-butyl-4-hydroxyphenyl)propionate], 0.2 parts by weight of tris(2,4-di-t-butylphenyl)phosphite, 0.1 parts by weight of erucic acid amide, 0.05 parts by weight of calcium stearate, 0.2 parts by weight of silica, 2.5 parts by weight of chlorinated paraffin and 0.2 parts by weight of di-n-octyltin maleate, were mixed by a super mixer (Model SMV20) manufactured by Kawada Works Co., Japan, and pelletized by a twinscrew extruder (Model AS30) manufactured by Nakatani Kikai K.k., Japan.

The sheets were prepared using a roll molding machine (Model R-2-2-FF) of 6 inch diameter, manufactured by Kodaira Seisakusho K.k., Japan, from each of the pellets thus obtained at a temperature of 170 to 175 °C. The calendering ability and appearance of each of the sheets thus obtained were measured.

Further, each of the pellets was laminated on both sides of a polyester base cloth of 750 denier by the above-mentioned roll molding machine to prepare laminate sheets of 0.3 mm thickness. The soil resistance and flame resistance were measured for the laminate sheets thus obtained.

Each of the laminate sheets was sewn using nomexmultifilament thread stripe 500 d/2f as sewing thread with lock stitch and straight two stitches in each case of needle operating numbers (pitch/10cm) 15, 25 and 50 by an industrial sewing machine, trademark "Singer 122W-115". The state of the sawn portions and sewing strength were measured. The results are shown in Table 4.

Examples 12 to 21, Comparative Examples 5 to 8

The species and amount of each BPP, organic bromine type flame retardant antimony oxide and ethylene-α-olefin random copolymer shown in Table 5, and as additives, 0.3 parts by weight of pentaerythrityle-tetrakis[3-(3,5-di-t-butyl-4-hydroxyphenyl)propionate], 0.2 parts by weight of tris(2,4-di-t-butylphenyl)phosphite, 0.1 parts by weight of erucic acid amide, 0.05 parts by weight of calcium stearate, 0.2 parts by weight of silica, 2.5 parts by weight of chlorinated paraffin and 0.2 parts by weight of di-n-octyltin maleate, were mixed by a super mixer (Model SMV20) manufactured by Kawada Works Co., Japan, and pelletized by a twinscrew extruder (Model AS30) manufactured by Nakatani Kikai K.k., Japan.

Test pieces of 2 mm and 6 mm thickness were prepared from each of the pellets thus obtained by a press molding machine at a temperature of 190 °C. Tensile test was conducted fro the former and surface hardness was measured for the latter.

The sheets were prepared using a roll molding machine (Model R-2-2-FF) of 6 inch diameter, manufactured by Kodaira Seisakusho K.k., Japan, from each of the pellets thus obtained at a temperature of 170 to 175 °C. The calendering ability and appearance of each of the sheets thus obtained were measured.

Further, each of the pellets was laminated on base sides of a polyester base cloth of 750 denier by the above-mentioned roll molding machine to prepare laminate sheets of 0.3 mm thickness. The soil resistance and flame resistance were measured for the laminate sheets thus obtained.

Each of the laminate sheets was sewn using nomexmultifilament thread stripe 500 d/2f as sewing thread with lock stitch and straight two stitches for each case of needle operating numbers (pitch/10cm) 25 by an industrial sewing machine, trademark "Singer 122W-115". The state of the sawn portions and was observed visually. The results are shown in Table 6.

The resin composition of the present invention has excellent flexibility and calendering ability and are useful in the fields of buildings, structures, electrical and electronic parts, etc., due to its low halogen content.

Table 1

| Signal | Probability equation of 2-site model |
|---|---|
| (1) Sαα | $P_p^2 \times P_{f1} + P'^2_p \times (1-P_{f1})$ |
| (2) Sαγ | $(-2P_p^3+2P_p^2) \times P_{f1} + (-2P'^3_p+2P'^2_p) \times (1-P_{f1})$ |
| (3) Sαδ | $(2P_p^3-4P_p^2+2P_p) \times P_{f1} + (2P'^3_p-4P'^2_p+2P'_p) \times (1-P_{f1})$ |
| (4) Tδδ | $(P_p^3-2P_p^2+P_p) \times P_{f1} + (P'^3_p-2P'^2_p+P'_p) \times (1-P_{f1})$ |
| (5) Sγγ + Tβδ | $(P_p^1-4P_p^3+3P_p^2) \times P_{f1} + (P'^1_p-4P'^3_p+3P'^2_p) \times (1-P_{f1})$ |
| (6) Sγδ | $(-2P_p^1+6P_p^3-GP_p^2+2P_p) \times P_{f1} + (-2P'^1_p+6P'^3_p-6P'^2_p+2P'_p) \times (1-P_{f1})$ |
| (7) Sδδ | $(P_p^1-5P_p^3+9P_p^2-7P_p+2) \times P_{f1} + (P'^1_p-5P'^3_p+9P'^2_p-7P'_p+2) \times (1-P_{f1})$ |
| (8) Tββ | $P_p^3 \times P_{f1} + P'^3_p \times (1-P_{f1})$ |
| (9) Sβδ | $(2P_p^3-4P_p^2+2P_p) \times P_{f1} + (2P'^3_p-4P'^2_p+2P'_p) \times (1-P_{f1})$ |
| (10) Sββ | $(-P_p^3+P_p^2) \times P_{f1} + (-P'^3_p+P'^2_p) \times (1-P_{f1})$ |

Table 2

| Species of BPP | Melt viscosity ratio ($\eta_1/\eta_2$) | Copolymer block (wt%) | Paraxylene insoluble matter (wt%) | Paraxylene soluble matter | | |
|---|---|---|---|---|---|---|
| | | | | FP (mol%) | $P_p$ (mol%) | $P_{f1}$ (-) |
| BPP1 | 5.3 | 63.0 | 41.0 | 75.3 | 84.1 | 0.77 |
| BPP2 | 4.8 | 69.1 | 38.2 | 72.1 | 82.2 | 0.71 |
| BPP3 | 5.9 | 58.3 | 43.6 | 73.8 | 78.2 | 0.82 |
| BPP4 | 6.3 | 65.2 | 39.5 | 75.2 | 84.6 | 0.74 |
| BPP5 | 5.6 | 58.6 | 40.2 | 61.8 | 68.6 | 0.56 |
| (For comparison) | | | | | | |
| BPP6 | 12.2 | 36.3 | 85.3 | 45.6 | 54.1 | 0.54 |
| BPP7 | 2.6 | 65.8 | 24.3 | 74.3 | 81.6 | 0.69 |
| BPP8 | 23.6 | 15.4 | 88.6 | 55.2 | 62.1 | 0.75 |

Table 3

| Example and Comp.Ex. | BPP | | Organic bromine type flame retardant | | Antimony Oxide Amount (parts by weight) | Bromine content in resin composition (wt%) |
|---|---|---|---|---|---|---|
| | Species | Amount (parts by weight) | Species | Amount (parts by weight) | | |
| Example 1 | BPP1 | 91 | Br1 | 5 | 4 | 4.1 |
| 2 | BPP1 | 86 | Br1 | 11 | 3 | 9 |
| 3 | BPP2 | 90 | Br1 | 5 | 5 | 4.1 |
| 4 | BPP2 | 86 | Br1 | 11 | 3 | 9 |
| 5 | BPP2 | 92 | Br1 | 6 | 2 | 4.9 |
| 6 | BPP3 | 87 | Br1 | 10 | 3 | 8.2 |
| 7 | BPP4 | 83 | Br1 | 10 | 7 | 8.2 |
| 8 | BPP5 | 88 | Br1 | 9 | 3 | 8.2 |
| 9 | BPP1 | 90 | Br2 | 5 | 5 | 3.3 |
| 10 | BPP2 | 86 | Br2 | 10 | 4 | 6.6 |
| 11 | BPP2 | 87 | Br3 | 10 | 3 | 6.5 |
| Comp.Ex,1 | BPP6 | 91 | Br1 | 5 | 4 | 4.1 |
| 2 | BPP6 | 83 | Br1 | 12 | 5 | 9.8 |
| 3 | BPP7 | 92 | Br1 | 5 | 3 | 4.1 |
| 4 | BPP8 | 91 | Br1 | 5 | 4 | 4.1 |

Table 4

| Example and Comp.Ex. | Calendering | | Soil resistance test | Flame resistance evaluation | | | | Sewing test | | | |
|---|---|---|---|---|---|---|---|---|---|---|---|
| | Calendering ability | Sheet appearance | | After-flame time (sec) | Afterglow existence | Carbonized length (cm) | Carbonized area (cm²) | State of sewing | Sewing strength(kg/3cm) Needle operating Number (pitch/10cm) | | |
| | | | | | | | | | 15 | 25 | 50 |
| Example 1 | ◎ | ◎ | ◎ | 0 | none | 4.2 | 10.2 | ◎ | 36.4 | 61.9 | 73.5 |
| 2 | ◎ | ○ | ◎ | 0 | none | 2.3 | 5.8 | ◎ | 38.5 | 64.6 | 75.4 |
| 3 | ◎ | ◎ | ◎ | 0 | none | 3.6 | 9.8 | ◎ | 40.2 | 64.6 | 76.2 |
| 4 | ◎ | ○ | ◎ | 0 | none | 2.2 | 5.2 | ◎ | 42.9 | 67.6 | 78.8 |
| 5 | ◎ | ◎ | ◎ | 0 | none | 4.6 | 10.8 | ◎ | 36.8 | 60.2 | 72.4 |
| 6 | ◎ | ○ | ◎ | 0 | none | 3.4 | 9.6 | ◎ | 38.8 | 62.6 | 74.8 |
| 7 | ◎ | ○ | ◎ | 0 | none | 1.8 | 4.2 | ◎ | 36.7 | 58.8 | 67.6 |
| 8 | ○ | ○ | ○ | 0 | none | 3.2 | 10.4 | ○ | 35.1 | 56.2 | 60.2 |
| 9 | ◎ | ○ | ○ | 0 | none | 4.8 | 10.4 | ◎ | 32.6 | 55.2 | 65.3 |
| 10 | ◎ | ◎ | ○ | 0 | none | 2.8 | 6.2 | ◎ | 33.4 | 56.7 | 67.1 |
| 11 | ◎ | ◎ | ◎ | 0 | none | 4.2 | 9.2 | ◎ | 35.9 | 57.2 | 66.3 |
| Comp.Ex. 1 | × | △ | △ | ≧60*1 | exist | ∞ | ∞ | △ | 20.8 | 25.6 | BR*2 |
| 2 | × | △ | △ | 0 | none | 4.8 | 12.8 | △ | 19.1 | 24.3 | BR*2 |
| 3 | △ | × | × | ≧60*1 | exist | ∞ | ∞ | △ | 11.2 | 14.3 | 17.5 |
| 4 | × | △ | △ | ≧60*1 | exist | ∞ | ∞ | × | BR*2 | BR*2 | BR*2 |

*1 : 60 sec or above

*2 : breakage

EP 0 816 422 A1

Table 5

| Example and Comp.Ex. | BPP | | Organic bromine type flame retardant | | Antimony oxide | Ethylene-$\alpha$-olefin random copolymer | | Bromine contnet in resin composition |
|---|---|---|---|---|---|---|---|---|
| | Species | Amount (parts by weight) | Species | Amount (parts by weight) | Amount (parts by weight) | Species | Amount (parts by weight) | (wt%) |
| Example 12 | BPP1 | 61 | Br1 | 5 | 4 | EPR1 | 30 | 4.1 |
| 13 | BPP2 | 45 | Br1 | 10 | 5 | EPR1 | 40 | 8.2 |
| 14 | BPP2 | 35 | Br1 | 10 | 5 | EPR1 | 50 | 8.2 |
| 15 | BPP2 | 65 | Br1 | 10 | 15 | EPR1 | 20 | 8.2 |
| 16 | BPP3 | 50 | Br1 | 10 | 10 | EPR1 | 30 | 8.2 |
| 17 | BPP4 | 42 | Br1 | 10 | 8 | EPR1 | 40 | 8.2 |
| 18 | BPP5 | 55 | Br1 | 5 | 10 | EPR1 | 30 | 4.1 |
| 19 | BPP2 | 40 | Br1 | 10 | 10 | EPR2 | 40 | 8.2 |
| 20 | BPP2 | 55 | Br2 | 10 | 5 | EPR1 | 30 | 6.6 |
| 21 | BPP2 | 52 | Br3 | 10 | 8 | EPR2 | 30 | 6.5 |
| Comp.Ex.5 | BPP6 | 100 | — | — | — | — | — | 0 |
| 6 | BPP6 | 65 | Br1 | 10 | 5 | EPR1 | 20 | 4.1 |
| 7 | BPP7 | 60 | — | — | — | EPR1 | 40 | 0 |
| 8 | BPP8 | 40 | Br1 | 5 | 5 | EPR1 | 50 | 4.1 |

12

Table 6

| Example and Comp.Ex. | Tesile test | | Calendering | | Surface hard-ness Shore A | Soil resi-sta-nce test | Flame resistance evaluation | | | | State of sew-ing |
|---|---|---|---|---|---|---|---|---|---|---|---|
| | Strength at break (kg/cm²) | Elonga-tion at break (%) | Calen-dering abili-ty | Sheet appea-rance | | | After-flame time (sec) | After-glow exist-ence | Carbo-nized (cm) | Carbo-nized (cm²) | |
| Example 12 | 89 | 750 | ◎ | ◎ | 78 | ◎ | 0 | none | 3.9 | 9.6 | ◎ |
| 13 | 51 | 860 | ○ | ◎ | 74 | ○ | 0 | none | 2.0 | 5.4 | ○ |
| 14 | 45 | 880 | ○ | ○ | 71 | ○ | 0 | none | 3.4 | 8.6 | ○ |
| 15 | 91 | 740 | ◎ | ◎ | 80 | ◎ | 0 | none | 1.8 | 5.4 | ◎ |
| 16 | 76 | 780 | ◎ | ◎ | 79 | ◎ | 0 | none | 3.8 | 10.6 | ◎ |
| 17 | 93 | 810 | ○ | ○ | 72 | ○ | 0 | none | 3.8 | 10.2 | ○ |
| 18 | 82 | 730 | ◎ | ◎ | 77 | ◎ | 0 | none | 2.8 | 4.8 | ◎ |
| 19 | 55 | 790 | ○ | ◎ | 76 | ○ | 0 | none | 3.5 | 10.5 | ○ |
| 20 | 88 | 770 | ◎ | ◎ | 80 | ◎ | 0 | none | 4.6 | 12.8 | ◎ |
| 21 | 59 | 760 | ◎ | ◎ | 78 | ◎ | 0 | none | 2.8 | 6.8 | ◎ |
| Comp.Ex.5 | 162 | 680 | × | × | 91 | ○ | ≧60*¹ | exist | ∞ | ∞ | × |
| 6 | 144 | 740 | × | △ | 87 | △ | 0 | none | 6.2 | 16.8 | × |
| 7 | 24 | 940 | × | × | 71 | × | ≧60*¹ | exist | ∞ | ∞ | △ |
| 8 | 172 | 210 | × | △ | ≧100*² | × | 0 | exist | ∞ | ∞ | × |

*¹ : 60 sec or above

*² : 100 or above

13

**Claims**

1. A flame retardant resin composition which comprises:

   (A) 70 to 98.5% by weight of a propylene-$\alpha$-olefin block copolymer wherein a ratio ($\eta_1/\eta_2$) of melt viscosity $\eta_1$ at a shear rate of $10^1 \text{sec}^{-1}$ to melt viscosity $\eta_2$ at a shear rate of $10^2 \text{sec}^{-1}$ is 3.5 to 8 as measured as by a slit die method,
   (B) 1 to 20% by weight of an organic bromine type flame retardant, and
   (C) 0.5 to 10% by weight of antimony oxide, wherein the total percentage of (A)+(B)+(C) is equal to 100% by weight.

2. A flame retardant resin composition which comprises:

   (A) 20 to 80% by weight of a propylene-$\alpha$-olefin block copolymer wherein a ratio ($\eta_1/\eta_2$) of melt viscosity $\eta_1$ at a shear rate of $10^1 \text{sec}^{-1}$ to melt viscosity $\eta_2$ at a shear rate of $10^2 \text{sec}^{-1}$ is 3.5 to 8 as measured as by a slit die method,
   (B) 1 to 20% by weight of an organic bromine type flame retardant, and
   (C) 0.5 to 10% by weight of antimony oxide, and
   (D) 15 to 70% by weight of an ethylene-$\alpha$-olefin random copolymer wherein a percentage of $\alpha$-olefin in the ethylene-$\alpha$-olefin random copoylmer is 20 to 30% by weight and a Shore A hardness is 50 to 65, wherein the total percentage of (A)+(B)+(C)+(D) is equal to 100% by weight.

3. The flame retardant resin composition according to claim 1 or 2, wherein the flame retardant resin composition has a bromine content of 0.5 to 10% by weight.

4. The flame retardant resin composition according to claim 1 or 2, wherein the component (A) comprises a polypropylene block and a copolymer block of propylene and at least one member selected from the group consisting of ethylene and an $\alpha$-olefin of 4 to 12 carbon atoms, and a percentage of the copolymer block to the total copolymer is 30 to 70% by weight.

5. The flame retardant resin composition according to claim 1 or 2, wherein the component (A) has the following properties (a) and (b):

   (a) a p-xylene-insoluble matter at 25°C is 25 to 65% by weight, and
   (b) a p-xylene-soluble matter at 25°C has (i) an average propylene content (FP) of 20 to 80 mole % based on the 2-site model, (ii) a propylene content ($P_p$) of 65 to 90 mole % in a copolymer ($P_H$) which is produced at an active point at which propylene is preferentially polymerised, based on the 2-site model, and (iii) a proportion ($P_{f1}$) of the $P_H$ to the copolymer of 0.40 to 0.90.

6. The flame retardant resin composition according to claim 2, wherein the $\alpha$-olefin in the component (D) is propylene.

7. A laminate coated a flame retardant resin composition comprising the resin composition according to claim 1 on at least one side of a fibrous base cloth.

8. A laminate coated a flame retardant resin composition comprising the resin composition according to claim 2 on at least one side of a fibrous base cloth.

9. A flame retardant sheet obtainable by processing the laminate according to claim 7 or 8.

# FIG. 1

(1) Sαα
(2) Sαγ
(3) Sαδ
(4) Tδδ
(5) Sγγ + Tβδ
(6) Sγδ
(7) Sδδ
(8) Tββ
(9) Sβδ
(10) Sββ

CHEMICAL SHIFT

# FIG. 2

S: METHYLENE
T: METHINE
P: METHYL

European Patent Office

**EUROPEAN SEARCH REPORT**

Application Number

EP 96 11 0304

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | JP-A-08 134 323 (SHOWA DENKO KK) <br> * table 4 * <br> --- | 1 | C08K13/02 <br> C08L53/00 <br> D06N3/00 <br> //(C08K13/02, <br> 3:22,5:02), <br> (C08L53/00, <br> 23:08) |
| Y | JP-A-04 178 446 (TOKUYAMA SODA CO LTD;OTHERS: 01) 25 June 1992 <br> * claims; tables * <br> ----- | 1 | |

TECHNICAL FIELDS
SEARCHED     (Int.Cl.6)

C08K
C08L
D06N

The present search report has been drawn up for all claims

| Place of search | Date of completion of the search | Examiner |
|---|---|---|
| THE HAGUE | 12 December 1996 | Schueler, D |

EPO FORM 1503 03.82 (P04C01)